Europäisches Patentamt

European Patent Office

Office européen des brevets

(11) Publication number: **0 336 703**
**A1**

## (12) EUROPEAN PATENT APPLICATION

(21) Application number: **89303303.5**

(22) Date of filing: **04.04.89**

(51) Int. Cl.⁴: **F 16 D 65/16**
**F 16 D 65/56, B 60 T 17/08,**
**B 61 H 15/00**

(30) Priority: **07.04.88 GB 8808108**

(43) Date of publication of application:
**11.10.89 Bulletin 89/41**

(84) Designated Contracting States: **DE FR GB IT**

(71) Applicant: **LUCAS INDUSTRIES public limited company**
**Great King Street**
**Birmingham, B19 2XF West Midlands (GB)**

(72) Inventor: **Harrison, Anthony William**
**63, Middle Park Road**
**Northfield Birmingham B29 4BH (GB)**

(74) Representative: **Makovski, Priscilla Mary et al**
**BARKER, BRETTELL & DUNCAN 138 Hagley Road**
**Edgbaston Birmingham B16 9PW (GB)**

(54) Vehicle disc brakes.

(57) A vehicle disc brake comprises a rotatable disc (1) to which pad assemblies (2) carried by a caliper assembly are applied by actuator means (5) including hydraulically-operated service piston means (7) and spring-operated hydraulically-released parking piston means (8), and an automatic adjuster (9) operating to compensate for wear of the pad assemblies. The brake is conveniently arranged for operation so that actuation of the parking piston means (8) occurs while the service piston means (7) is actuated. This reduces the clearances which have to be taken up by operation of the parking piston means (8), as the clearances in the brake have been taken up by operation of the service piston means (7). The clearances can be reduced further by use of a follower adjuster, comprising a screw-threaded first member (27,46) on the service piston means (7) and an adjuster member (30,47) rotatable on the member (27,46) to maintain a substantially constant clearance between itself and the parking piston means (8), and operative to transmit the parking load to the service piston means (7) when the parking brake is operated.

FIG 1

EP 0 336 703 A1

**Description**

## VEHICLE DISC BRAKES

This invention relates to a vehicle disc brake of the kind comprising a rotatable disc, a caliper assembly carrying pad assemblies, and actuator means for applying the pad assemblies to opposing faces of the disc, the actuator means including hydraulically-operated service piston means and spring-operated hydraulically-released parking piston means, and an automatic adjuster to compensate for wear of the pad assemblies.

Disc brakes of the kind set forth are widely used on rail vehicles, and one of the major problems with them is that the parking spring has to be large and strong, to ensure that the parking piston means will operate the brake for all possible brake clearances. Even with the automatic adjuster, the clearances which have to be taken up on operation of the parking brake are considerable, as they include deflections of the caliper assembly, as well as the usual clearances between the various components of the brake. Furthermore, if the service piston means is "knocked back" by the disc on release of the service brake, it can result in operation of the adjuster in a direction to increase, rather than decrease, the brake clearances. In one known disc brake of the kind set forth, shown in G.B.-A-2 187 244, the adjuster comprises a nut rotatably mounted on a splined and threaded shaft of the service piston, and a detent means is provided, which is mounted for axial movement on the shaft, and has a toothed engagement with the nut, ensuring that the nut does not move on knockback of the service piston. In service operation, the piston moves away from the nut, which is held against rotation by the detent means until it is engaged by a thrust ring when the desired brake clearance has been exceeded. This construction has the disadvantage of making the construction of the actuator means very complex, and of course does not affect the other clearances.

The present invention adopts a different approach to the problem, by reducing the clearances which have to be taken up on operation of the parking brake.

According to a first aspect of the present invention, a method of operating a disc brake of the kind set forth comprises operating the parking piston means while the service piston means is actuated.

This has the result that operation of the service piston means takes up most of the clearances in the brake, including the deflection of the caliper, so that operation of the parking piston means has only to take up the clearances between the parking piston means and the adjuster, and the clearances in the adjuster itself. Furthermore knockback of the service piston means, which occurs only on release of the service brake, cannot affect operation of the parking brake. The parking spring can therefore be reduced in size, because the clearances that have to be taken up in operation of the parking brake are substantially reduced.

According to a second aspect of the present invention, in a disc brake of the kind set forth the adjuster comprises first and second members having a screw-threaded engagement, the first member being non-rotatable and movable axially with the service piston means and the second member being rotatable on the first member, the arrangement being such that the second member is rotatable to maintain a substantially constant clearance between itself and the parking piston means when the parking brake is inoperative, and is operative to transmit the load from the parking piston means to the service piston means on operation of the parking brake.

This aspect of the invention uses a follower adjuster, that is one operating on brake release as well as brake application, so that it maintains a substantially constant clearance between itself and the parking piston means, and enables this clearance to be reduced.

Normally, follower adjusters are affected by knockback of the service piston means, but this problem can be overcome if the brake is operated in accordance with the first aspect of the invention, to ensure that the adjuster cannot be affected by knockback when the parking brake is operated. It will also be appreciated that it is particularly advantageous for a brake to combine both aspects of the invention, as this minimises the clearances which have to be taken up on operation of the parking brake, so that the parking spring can be correspondingly reduced in size.

Preferably the second member and the parking piston means have complementary clutch faces which engage when the parking brake is operated. The second member may be mounted for rotation by balls located in raceway means on a relatively stationary part of the actuator means. Biasing means may bias the balls and raceway means into a retracted position in which axial movement of the second member is prevented. On engagement of the clutch faces the force in the biasing means is overcome, and the second member is then prevented from rotating, while axial movement is allowed. The part may have splines engaging with complementary splines on the first member to restrain it against rotation.

The first member may comprise an externally-threaded stud, with the second member comprising a nut. Alternatively, the second member may be an externally-threaded stud, and the first member is then a nut.

The service piston means may work in a bore in the parking piston means. The parking piston means may comprise a first normally stationary piston having the bore in which the service piston means works, and a second piston movable in response to the parking spring, and to pressurisation of an hydraulic chamber formed between the pistons. The second piston is provided with the clutch face. The two pistons are preferably keyed against relative rotation.

If a brake incorporates only the second aspect of the invention, without the first, it may be necessary to control knockback of the service piston means. Preferably, this is achieved by incorporating detent means acting to limit movement of the second adjuster member on release of the service brake.

The detent means preferably comprises a ring provided between the stationary part and the second adjuster member. The ring may have a toothed engagement with the stationary part, and a slot in which a projection on the second member is received with clearance to allow relative rotational movement of the second member and the ring. This arrangement, although adding to the complexity of the actuator means, is still relatively simple.

Some embodiments of both aspects of out invention is illustrated, by way of example, in the accompanying drawings, in which:-

Figure 1 is a half-section through a disc brake;

Figure 2 shows a modification of Figure 1;

Figure 3 is similar to Figure 1, but shows a further modification; and

Figure 4 is a local view in the direction of the arrow of Figure 3.

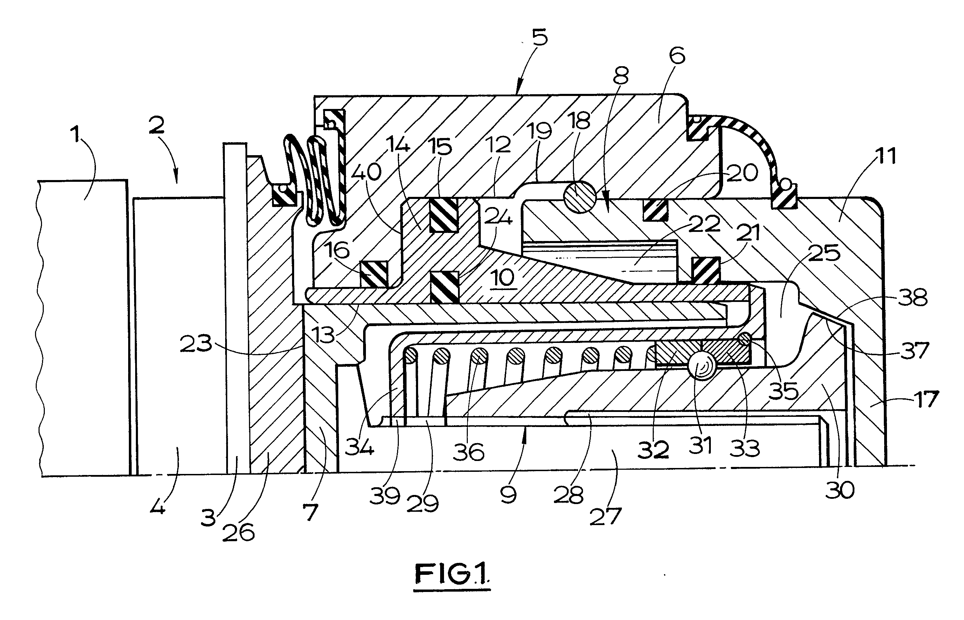

The disc brake shown in Figure 1 comprises a rotatable disc 1, a pair of pad assemblies 2 (only one of which is shown), each comprising a backing plate 3 and a lining 4 of friction material, carried by a caliper assembly (not shown), together with actuator means 5 adapted to apply the pad assemblies 2 to the disc 1.

The actuator measn 5 has a housing 6 in which works an hydraulically-operated service piston 7, spring-operated hydraulically-released parking piston means 8 and an automatic adjuster 9 which operates to compensate for wear of the friction linings 4. The parking piston means 8 comprises first and second pistons 10, 11 working in a stepped bore 12 in the housing 6. The first parking piston 10 is normally stationary, being of stepped outline, and having a through-bore 13. A portion 14 of largest diameter carries a seal 15 engaging with the bore 13, and a further seal 16 also seals between the piston 10 and the bore 12. The second parking piston 11 is hollow, being closed at its outer end 17. It is movable relative to the housing through a limited distance defined by a circlip 18 located round the piston 11, and in an annular groove 19 formed in the bore 12. The piston 11 carries a first seal 20 in sealing engagement with the bore 12, and a second seal 21 in sealing engagement with the outer peripheral face of the piston 10 at its rearward end. A parking spring (not shown) acts on the closed end of the second piston 11 to urge it forwardly, but the pistons are normally kept in the inoperative position shown by hydraulic pressure in a chamber 22 defined between the pistons 10, 11 by the seals 15, 20 and 21. The pistons 10, 11 are keyed together against relative rotation by means not shown.

The service piston 7 is a hollow piston closed at its forward end 23. It works in the bore 13 in the piston 10, through a seal 24, and is operated in response to hydraulic pressure in an actuator chamber 25. The forward end 23 acts through a spreader plate 26 onto the backing plate 3 of the pad assembly 2. The piston 7 also has a rearwardly extending stud member 27, which is provided with an external screw-thread 28 and axial splines 29. The stud member 27 and a nut 30 comprise first and second members forming the adjuster 9.

The nut 30 is freely rotatable on the stud 27, and is mounted for rotation by balls 31 engaging in recesses in the nut 30 and in a pair of raceways 32, 33 located on a relatively stationary shell member 34 attached to the first parking piston 10 at its rearward end. The raceways 32, 33 are loaded against circlip 35 on the shell 34 by a spring 36. The circlip 35 defines a retracted position for the nut 30, in which there is a small clearance between complementary frusto-conical clutch surfaces 37, 38 on the nut 30 and second parking piston 11 respectively. The forward end of the shell 34 has splines 39 engaging with the splines 29 on the stud member 27 to prevent it rotating.

In the inoperative position shown the chamber 22 is pressurised, and the actuator chamber 25 is unpressurised, so that both the parking and service brakes are off. For operation of the service brake, the actuator chamber 25 is pressurised, advancing the service piston 7 to apply the pad assemblies 2 to the disc 1, with movement of the service piston 7 taking up all the clearances in the brake, including deflection of the caliper. The stud 27 moves with the piston 7, and during this movement the adjuster nut 30, which is restrained against axial movement by the balls 31 and raceways 32, 33, and spring 36 rotates freely on the stud 27, to maintain the clearance between the clutch faces 37, 38. It will be noted that this clearance is defined between parts of the parking piston means, which is relatively rigid axially when the parking brake is inoperative, and so the clearance is not substantially affected by movement of the service piston 7.

On release of the service brake the piston 7 is returned to its retracted position by the expansion of seals and such like compressed during operation, and the adjuster nut 30 rotates on the stud 27 in the opposite direction, again maintaining the clearance between the clutch faces 37, 38. As the pad linings 4 wear, the retracted position of the service piston 7 moves forwardly to maintain a substantially constant clearance between the linings 4 and the disc 1, and the clearance between the clutch faces 37, 38 is also maintained.

The overall operation of the brake is arranged so that if the parking brake is to be applied, it is operated while the service brake is applied, and not following its release. For operation of the parking brake, the pressure in chamber 22 is released, so that the force in the parking spring acts to advance the piston 11 in the bore 12. This brings the clutch faces 37, 38 into engagement to hold the nut 30 against rotation, so that it transmits the force to the stud 27 and the service piston 7 to apply the brake. The torque reaction from the nut 30 is transmitted via the clutch faces to the second parking piston 11, then to the first parking piston 10, as these pistons are keyed against relative rotation, and then to the stud 27 by the shell 34 and splines 29, 39. The torque reaction thus has a rigid load path which includes a fixed short length of the stud 27, irrespective of the relative position of the piston 7, so that torsional deflection of the stud 27 is limited. Relative axial movement of the nut 30 and the stud 27 under load is accommodated by the parting of the raceways 32, 33 and compression of the spring 36. It will be noted however that in operation the parking brake has to take up only the small clearances between the clutch faces 37, 38 and in the adjuster itself, as substantially all the remaining clearances in the brake have been taken up by operation of the service brake. This means that the parking spring can be reduced in size.

On release of the parking brake the second piston 11 returns to its retracted position under the effect of pressure in the chamber 22, and the remaining parts are retracted by the expansion of the seals and such like.

It will be noted that if the pad assemblies 2 are to be changed, it is easy to retract the service piston 7 manually, as the adjuster will not provide any opposing force, but will simply rotate on the stud 27.

If the presure in chamber 22 fails, the parking spring can be released by pressurising a chamber 40 in front of the first parking piston 10, thus moving the pistons 10 and 11 rearwardly. This movement also moves the shell 34, compressing the spring 36, so that the service piston 7 cannot be retracted, unless the chamber 22 is re-pressurised, or the pad assembly 2 is removed and the pressure released from the chamber 40.

This construction of disc brake provides efficient operation, especially of the parking brake, and is also simple in construction.

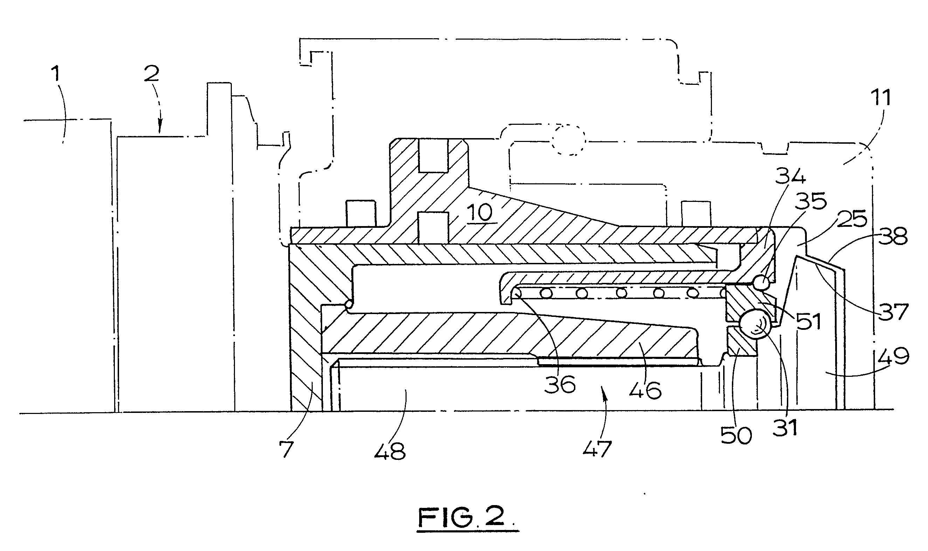

The disc brake of Figure 2 shows a modification to the adjuster 9, and corresponding reference numerals have been applied to corresponding parts. In Figure 2 the first adjuster member comprises an internally-threaded nut member 46 provided on the piston 7, and the second adjuster member comprises an externally-threaded stud member 47, whose inner end 48 extends axially within the service piston 7, and whose outer end 49 is enlarged and provided with the clutch face 37. The stud member 47 is mounted for rotation by balls 31 engaging in recesses in the member 47, a ring 50 secured to the member 47, and a raceway 51 located on the shell 34. The spring 36 loads the raceway 51 against the circlip 35. The remainder of the construction of Figure 2 is similar to that of Figure 1, although it will be noted that the splines 29,39 are omitted, the piston 7 and nut 46 being prevented from rotating by means not shown.

The operation of the brake of Figure 2 is similar to that of Figure 1, with the stud 47 rotating during normal service braking to maintain the clearance between the clutch faces 37,38, but on operation of the parking brake transmitting the force to the nut 46 and the service piston 7 to apply the brake. As the splines 29,39 are omitted, the torque reaction load path is completed through the service piston 7. Such a construction may be used where it is not necessary to limit the torsional deflection of the first adjuster member.

In the disc brakes of Figures 1 and 2 the arrangement is such that the parking brake also acts as an emergency brake. This means that the force generated by actuation of the parking piston means is at least as great as that generated by the service piston means, with the caliper deflecting accordingly. It is therefore necessary to accommodate forward movement of the service piston 7 relative to the shell 34 on application of the parking brake in order to ensure that clearances forward of the adjuster are taken up. However, if the parking brake is not required to act as an emergency brake, the force generated by the parking piston means can be reduced. In this event, caliper deflection therefore retracts on release of the service brake following application of the parking brake, and moves the service piston 7 rearwardly, which takes up the clearances forward of the adjuster, so there is no need to accommodate forward movement of the service piston 7 relative to the shell 34.

Thus, in a modification (not shown) the spring 36 is omitted and the raceway 32 is fixed to the shell 34. The actuator means 5 then functions as a lock actuator when the parking brake is applied.

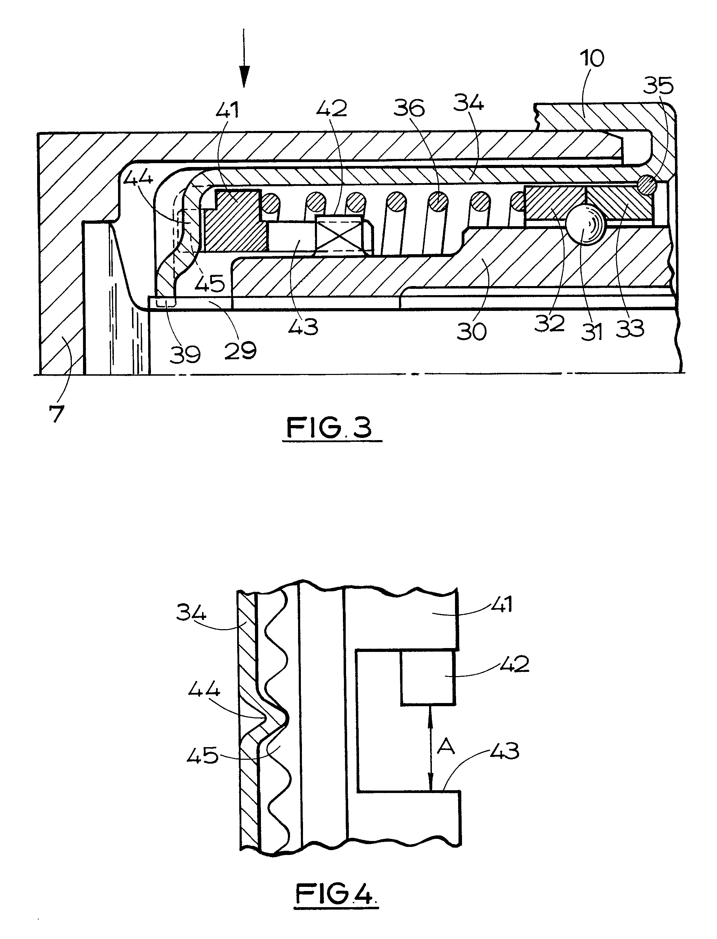

The further modification shown in Figures 3 and 4 is designed to be particularly advantageous if the adjuster 9 is used in a brake with the normal sequence of operation, that is, where the parking brake is operated following release of the service brake, as it enables knockback of the service piston 7 to be controlled, so that it does not affect the adjuster.

In Figures 3 and 4 the actuator means 5 includes a detent ring 41 located between the nut 30 and the shell 34. The ring 41 is keyed to the nut 30 by a projection 42 on the nut 30 engaging in a keyslot 43 in the ring 41. A clearance A, which defines the minimum pad clearance, is provided between the projection 42 and the slot 43 to allow limited relative rotation of the ring 41 and the nut 30. The shell 34 has three or more dents 44 pressed in its end to act as detent teeth engaging with teeth 45 on the forward end of the detent ring 41. The teeth 44 and 45 are held in engagement by the spring 36. The remaining construction of Figures 3 and 4 is the same as that of Figure 1, and corresponding reference numerals have been applied to corresponding parts.

On operation of the service piston 7, the nut 30 first rotates relative to the ring 41 to take up the clearance A, and then the nut 30 and ring 41 rotate together to move the teeth 45 relative to the teeth 44 on the shell 34. If no adjustment to compensate for pad lining wear is required, the teeth 45 ride up the detent teeth 44, but the arrangement is such that the teeth do not jump over each other, and on brake release the parts return to their original positions. If adjustment is required, the increased travel of the service piston 7 causes further rotation of the nut 30 and ring 41, causing the teeth 45 to jump over the teeth 44. When the parts return to their retracted positions, the pad clearance is once again defined by the clearance A.

If the service piston 7 is knocked back on brake release, the detent ring 41 acts as a stop preventing movement of the nut 30. The characteristics of the teeth 44 and 45 are chosen so that the teeth 44 and 45 do not jump over each other as a result of knockback. In fact the detent ring 41 acts to absorb the energy of the individual knockback impacts, and then returns the brake to its retracted position. However, the effect of the detent ring 41 can be overcome by sustained force applied to the service piston 7, so that it is still easy to retract the service piston 7 in order to change the pad assemblies.

It will be noted that, although the construction shown in Figures 3 and 4 is more complex than that of Figures 1 and 2, it is still relatively simple.

In a further modification, not shown, the service piston 7 is not concentric with the parking piston means 8. Instead, the housing 6 is provided with a central through bore and two parallel blind bores, with the service piston means working in the central bore, and the parking piston means comprising three separate pistons, one working in each bore. The pistons are connected by a beam arrangement, on which the parking springs act, to ensure that they all move together. The central parking piston is provided with a clutch face for the adjuster 9. The two blind bores have hydraulic chambers, the pressure in which acts on the respective parking pistons to maintain the parking piston means in its inoperative position.

## Claims

1. A method of operating a vechicle disc brake comprising a rotatable disc (1), a caliper assembly carrying pad assemblies (2) and actuator means (5) for applying the pad assemblies (2) to opposing faces of the disc (1), the actuator means (5) including hydraulically-operated service piston means (7) and spring-operated hydraulically-released parking piston means (8), and an automatic adjuster (9) to compensate for wear of the pad assemblies (2), characterised in that the operation of the parking piston means (8) occurs while the service piston means (7) is actuated.

2. A vechicle disc brake comprising a rotatable disc (1), a caliper assembly carrying pad assemblies (2) and actuator means (5) for applying the pad assemblies (2) to opposing faces of the disc (1), the actuator means (5) including hydraulically-operated service piston means (7) and spring-operated hydraulically-released parking piston means (8), and an automatic adjuster (9) to compensate for wear of the pad assemblies (2), characterised in that the adjuster (9) comprises first and second members having a screw-threaded engagement, the first member (27,46) being non-rotatable and movable axially with the service piston means (7) and the second member (30,47) being rotatable on the first member (27,46), the arrangement being such that the second member (30,47) is rotatable to maintain a substantially constant clearance between itself and the parking piston means (8) when the parking brake is inoperative, and is operative to transmit the load from the parking piston means (8) to the service piston means (7) on operation of the parking brake.

3. A vehicle disc brake according to claim 2, in which the second member (30, 47) and the parking piston means (8) have complementary clutch faces (37,38) which engage when the parking brake is operated.

4. A vehicle disc brake according to claim 2 or claim 3, in which the second member (30,47) is mounted for rotation by balls (31) located in raceway means (32,33,51) on a relatively stationary part (34) of the actuator means (5).

5. A vehicle disc brake according to claim 3 and claim 4, in which biassing means (36) bias the balls (31) and raceway means (32,33,51) into a retracted position in which axial movement of the second member (30, 47) is prevented, engagement of the clutch faces (37,38) overcoming the force in the biassing means (36) to prevent rotation but allow axial movement of the second member (30,47).

6. A vehicle disc brake according to claim 4 or claim 5, in which the part has splines (39) engaging with complementary splines (29) on the first member (27,46).

7. A vehicle disc brake according to any of claims 2 to 6, in which the first member comprises an externally-threaded stud (27), and the second member comprises a nut (30).

8. A vehicle disc brake according to any of claims 2 to 6, in which the second member comprises an externally-threaded stud (47), and the first member comprises a nut (46).

9. A vehicle disc brake according to any of claims 2 to 8, in which the service piston means (7) works in a bore in the parking piston means (8).

10. A vehicle disc brake according to claim 9, in which the parking piston means (8) comprises a first normally stationary piston (10) having the bore (13) in which the service piston means (7) works, and a second piston (11) movable in response to the parking spring, and to pressurisation of an hydraulic chamber (22) formed between the pistons (10,11).

11. A vehicle disc brake according to claim 3 and claim 10, in which the second piston (11) is provided with the clutch face (38).

12. A vehicle disc brake according to claim 10 or claim 11, in which the parking pistons (10,11) are keyed against relative rotation.

13. A vehicle disc brake according to any of claims 2 to 12, in which detent means (41) is incorporated to limit movement of the second member (30,47) on release of the service brake.

14. A vehicle disc brake according to claim 13, in which the detent means comprises a ring (41) provided between a relatively stationary part (34) of the actuator means (5) and the second member (30,47).

15. A vehicle disc brake according to claim 14, in which the ring (41) has a toothed engagement (44,45) with the stationary part (34), and a slot (43) in which a projection (42) on the second member (30,47) is received with clearance to allow relative rotational movement of the second member (30,47) and the ring (41).

FIG1.

FIG. 2.

EP 0 336 703 A1

**FIG. 3**

**FIG 4.**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | GB-A-1 407 578 (GENERAL SIGNAL CORP.) <br> * Whole document * | 1-3,8, 11 | F 16 D 65/16 <br> F 16 D 65/56 <br> B 60 T 17/08 <br> B 61 H 15/00 |
| A | | 4,5 | |
| X | GB-A-1 488 742 (GENERAL SIGNAL CORP.) <br> * Whole document * | 1-3,8, 11 | |
| A | | 4,5 | |
| X | FR-A-2 261 446 (GIRLING LTD) <br> * Page 2, line 19 - page 5, line 12; page 6, lines 13-36; figures 1,2,4 * | 1-3,7, 11 | |
| A | | 4,5 | |
| A | FR-A-2 600 027 (KNORR-BREMSE AG) <br> * Figure 1 * | 1-5,8- 12 | |
| A,D | GB-A-2 187 244 (LUCAS INDUSTRIES PUBLIC LTD CO.) <br> * Figures 1,2 * | 1 | |

TECHNICAL FIELDS
SEARCHED (Int. Cl.4)

F 16 D 65/00
B 60 T 17/08
B 61 H 15/00

The present search report has been drawn up for all claims

| Place of search | Date of completion of the search | Examiner |
|---|---|---|
| THE HAGUE | 18-07-1989 | BRAEMS C.G.I. |

EPO FORM 1503 03.82 (P0401)